# EUROPÄISCHE PATENTANMELDUNG

(11) **EP 2 087 786 A1**
(43) Veröffentlichungstag der Anmeldung: **12.08.2009**
(21) Anmeldenummer: 09001513.2
(22) Anmeldetag: 04.02.2009
(51) Int. Cl.: A01K 1/015

(54) **Beheizbare Bodenplatte für einen Stallboden**

(30) Priorität: 04.02.2008 DE 202008001603 U; 11.11.2008 DE 202008014958 U
(71) Anmelder: MIK INTERNATIONAL AG, 56427 Siershahn (DE)
(72) Erfinder: Ertel, Thomas, 37603 Holzminden (DE)
(74) Vertreter: Behrendt, Arne

(57) **Zusammenfassung**

Die Erfindung betrifft eine beheizbare Bodenplatte für einen Stallboden, insbesondere für einen Schweinestall, bestehend aus einem plattenförmigen, einen Hohlraum (2) ausbildenden Plattenkörper (1), dessen Oberseite als Liegefläche für die Tiere ausgebildet ist und durch dessen mit einem flüssigen Wärmeübertragungsmedium befüllten Hohlraum (2) mindestens ein metallisches Heizrohr verläuft, welches an eine externe Wärmequelle anschließbar ist. Um bei einer derart beheizbaren Bodenplatte für einen besseren Wärmeübergang zwischen dem Heizmedium und dem Wärmeübertragungsmedium herzustellen, schlägt die Erfindung vor, dass das Heizrohr als profiliertes Rohr (3) ausgebildet ist, welche eine gegenüber einem zylindrischen Rohr vergrößerte Oberfläche hat. Eine besonders bevorzugte Ausführungsform der Erfindung sicht vor, dass im Inneren des profilierten Rohres (3) ein Widerstandsheizdraht (4) verläuft und dass im Zwischenraum zwischen dern Widerstandsheizdraht (4) und der Wand des profilierten Rohres (3) eine Isolierung (5) angeordnet ist, die den Widerstandsheizdraht (4) auf Distanz von der Wand des profilierten Rohres (3) hält und zugleich einen großflächigen, wärmeübertragenden Kontakt zwischen dem Widerstandsheizdraht (4) und der Wand des profilierten Rohres (3) herstellt.

## Beschreibung

Die Erfindung betrifft eine beheizbare Bodenplatte für einen Stallboden, insbesondere für einen Schweinestall, bestehend aus einem plattenförmigen, einen Hohlraum ausbildenden Plattenkörper, dessen Oberseite als Liegefläche für die Tiere ausgebildet ist und durch dessen mit einem flüssigen Wärmeübertragungsmedium befüllten Hohlraum mindestens ein metallisches Heizrohr verläuft, welches an eine externe Wärmequelle anschließbar ist.

Eine derartige beheizbare Bodenplatte ist aus der DE 202 03 466 U1 bekannt.

Derartige indirekt beheizbare Bodenplatten haben gegenüber direkt beheizbaren Bodenplatten, bei denen im Plattenkörper selbst Durchströmkanäle für warmes Wasser ausgebildet sind (vgl. z.B. EP 0 601 282 B1 oder DE 60 2004 002 238 T2) den Vorteil, dass die zugeführte Wärme durch das im Hohlraum der Platte befindliche Wärmeübertragungsmedium gleichmäßig über die als Liegefläche für die Tiere dienende Oberseite der Bodenplatte verteilt wird. Das Heizrohr selbst kann von beliebigen Heizmedien beheizt werden, d. h. also von durchströmendem heißen Wasser oder Dampf oder gegebenenfalls auch elektrisch durch einen Widerstandsheizdraht, der im Inneren des Heizrohres verläuft.

Ein Problem bei den bekannten Bodenplatten der eingangs genannten Art besteht allerdings darin, dass die Wärmeübertragung zwischen den verhältnismäßig dünnen Heizrohren und dem flüssigen Wärmeträgermedium im Hohlraum des Plattenkörpers zu wünschen übrig lässt.

Es ist deshalb Aufgabe der Erfindung, die beheizbare Bodenplatte der eingangs genannten Art dahingehend weiterzubilden, dass ein intensiverer Wärmeübergang zwischen dem Heizrohr und dem flüssigen Wärmeübertragungsmedium im Inneren des Hohlraums des Plattenkörpers stattfindet.

Zur Lösung dieser Aufgabe schlägt die Erfindung ausgehend von einer Bodenplatte der eingangs genannten Art vor, dass das Heizrohr als profiliertes Rohr mit gegenüber einem zylindrischen Rohr vergrößerter Oberfläche, vorzugsweise als Drall- oder Wellrohr ausgebildet ist.

Die Verwendung eines derart profilierten Rohres an Stelle des beim Stand der Technik üblichen zylindrischen Metallrohres als Heizrohr hat zunächst den Vorteil, dass die der Wärmeübertragung dienende Oberfläche des Heizrohres erheblich vergrößert wird. Dadurch wird der Wärmeübergang vom Heizmedium auf das Wärmeübertragungsmedium erheblich intensiviert. Außerdem kommt man bei Verwendung eines profilierten Rohres mit erheblich geringeren Wandstärken aus, was ebenfalls den Wärmeübergang vom Heizmedium auf das Wärmeübertragungsmedium im Hohlraum der Bodenplatte erleichtert. Aufgrund des verbesserten Wärmeübergangs kommt man zur Erzielung der erforderlichen Liegeflächentemperatur, die geringfügig oberhalb der normalen Körpertemperatur der Tiere liegt, mit einer erheblich geringen Vorlauftemperatur aus. Hierdurch werden unnötige Energieverluste vermieden und insgesamt die Energieeffizienz deutlich verbessert.

Trotz der sehr geringen Wandstärke behält ein profiliertes Rohr besser die geforderte Steifigkeit, und zwar auch dann, wenn es innerhalb des Hohlraums um einen engen Biegeradius gebogen wird. Außerdem kommt es im Biegebereich nicht so leicht zu Einschnürungen des Durchströmungsquerschnittes, wie dies bei zylindrischen Metallrohren der Fall ist.

Im Ergebnis ist das profilierte Rohr wesentlich flexibler, als ein zylindrisches Rohr, wodurch die Handhabung beim Einbringen in den Hohlraum des Plattenkörpers erleichtert wird. Die Verwendung eines profilierten Rohres als Heizrohr bietet also auch Vorteile bei der Herstellung der beheizbaren Bodenplatte.

Eine besonders bevorzugte Ausführungsform der Erfindung sieht vor, dass das profilierte Rohr aus Edelstahl besteht und eine Wandstärke von 0,1 bis 0,6 mm hat. Die Profilierung ergibt sich beim Wellrohr oder Drallrohr aus Wandeinformungen, die entweder ringförmig um die Rohrachse oder helikal zur Rohrachse verlaufen. Neben dieser besonderen Profilierung sind auch andere, die Oberfläche vergrößernde Profilierungen des profilierten Rohres denkbar.

Vorzugsweise ist das profilierte Rohr im Inneren des Hohlraums des Plattenkörpers mit Abstand zum Boden dieses Hohlraums angeordnet. Hierdurch wird sichergestellt, dass das Heizrohr nicht unmittelbar mit dem Material des Plattenkörpers in Berührung kommt und dass zwischen der Außenseite des Heizrohres und dem Boden des Plattenkörpers ausreichende Durchtrittsquerschnitte verbleiben, durch welche das Wärmeübertragungsmedium frei hindurchströmen kann. Dieser freie Querschnitt wird durch die Profilierung des Heizrohres natürlich noch vergrößert.

Eine besonders bevorzugte Ausführungsform der Erfindung sieht vor, dass im Innenraum des profilierten Rohres ein Widerstandsheizdraht verläuft und dass im Zwischenraum zwischen dem Widerstandsheizdraht und der Wand des profilierten Rohres eine Isolierung angeordnet ist, die den Widerstandsheizdraht auf Distanz von der Wand des profilierten Rohres hält und zugleich einen großflächigen wärmeübertragenden Kontakt zwischen dem Widerstandsheizdraht und der Wand des profilierten Rohres herstellt. Eine solche gut wärmeleitende Isolierung zwischen dem Widerstandsheizdraht und der Wand des profilierten Rohres verbessert die Wärmeübertragung in das flüssige Wärmeübertragungsmedium des Plattenkörpers ebenfalls und verhindert einen Wärmestau im Inneren des profilierten Rohres. Außerdem sorgt diese Isolierung dafür, dass der Widerstandsheizdraht mit Abstand zur Wandung des profilierten Rohres gehalten wird und nirgendwo mit dieser Wandung in Berührung kommt, was zu örtlichen Überhitzungen und Beschädigungen der Wand des profilierten Rohres führen könnte.

Die Isolierung besteht zweckmäßig aus einem den Zwischenraum zwischen dem Widerstandsheizdraht und der Wand des profilierten Rohres ausfüllenden, wärmeleitfähigen Mineralpulver, welches beispielsweise aus kristallinen Silikaten, Quarz, Siliziumcarbid oder Bohrcarbid bestehen kann. Dieses Mineralpulver fixiert den Widerstandsheizdraht etwa in der Mitte des profilierten Rohres und sorgt zugleich für eine gleichmäßige Wärmeübertragung nach allen Seiten hin in Richtung auf die Wandung des profilierten Rohres.

Alternativ kann die Isolierung auch aus einer den Widerstandsheizdraht umschließenden zylindrischen Hülle bestehen, die an den nach innen vorstehenden Flächenbereichen des profilierten Rohres abgestützt ist. Diese isolierende Hülle besteht ebenfalls aus einem elektrisch isolierenden Material, welches dennoch gut wärmeleitfähig ist und für eine gute Wärmeübertragung auf die berührenden Wandbereiche des profilierten Rohres sorgt.

Eine weitere Verbesserung der Wärmeübertragung von dem Widerstandsheizdraht auf die Wand des profilierten Rohres kann dadurch herbeigeführt werden, dass die Isolierung durch eine in das profilierte Rohr eingefüllte, wärmeleitende Flüssigkeit ergänzt wird. Diese Flüssigkeit füllt alle etwa in der Isolierung verbleibenden Hohlräume aus und ergänzt den angestrebten guten Wärmeübergang von dem Widerstandsheizdraht auf das profilierte Rohr.

Ausführungsbeispiele der Erfindung werden im folgenden anhand der Zeichnung näher erläutert. Es zeigen:
- Fig. 1:: Schematisch eine Draufsicht auf eine Bodenplatte gemäß der Erfindung in einer ersten Ausführungsform;
- Fig. 2:: einen Schnitt entlang der Linie A-A in Figur 1;
- Fig. 3:: einen vergrößerten Querschnitt durch die Bodenplatte gemäß Figur 1;
- Fig. 4:: schematisch eine Draufsicht auf eine Bodenplatte gemäß der Erfindung in einer zweiten Ausführungsform;
- Fig. 5:: einen Schnitt entlang der Linie A-A in Figur 4;
- Fig. 6:: einen vergrößerten Querschnitt durch die Bodenplatte gemäß Figur 4 mit einem ringförmig gewellten Wellrohr;
- Fig. 7:: einen vergrößerten Querschnitt durch die Bodenplatte gemäß Figur 4 mit einem helikal gewellten Wellrohr.

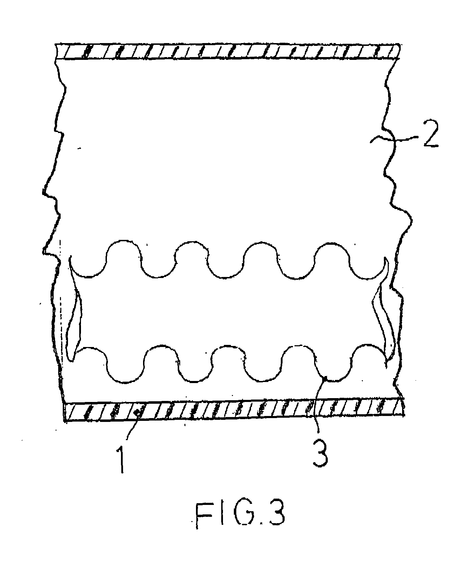

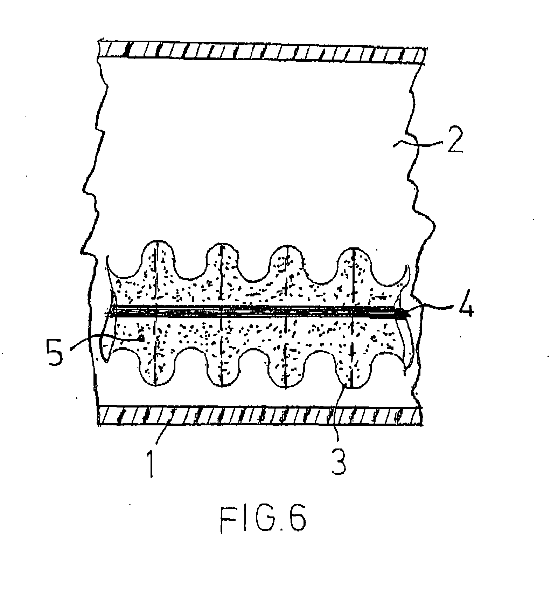

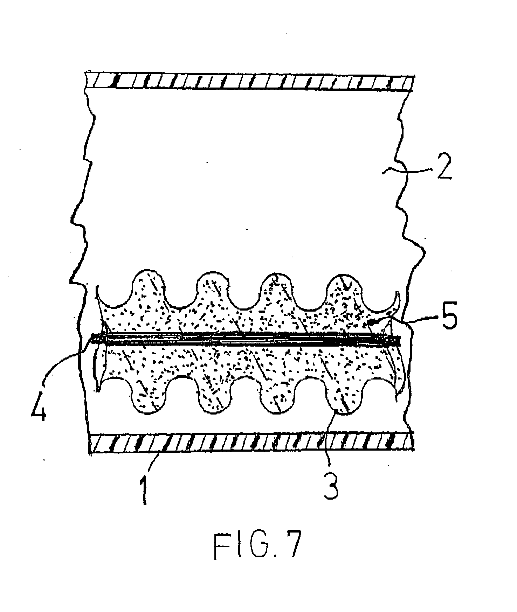

In der Zeichnung ist der aus Kunststoff, z. B. Polypropylen oder Polyethylen gefertigte Plattenkörper mit dem Bezugszeichen 1 bezeichnet. Der Plattenkörper 1 umschließt einen Hohlraum 2, in welchem ein U-förmig gebogenes Heizrohr angeordnet ist. Dieses Heizrohr besteht aus nicht rostendem Stahl, hat eine Wandstärke von 0,1 bis 0.6 mm und ist insgesamt als profiliertes Rohr 3 ausgebildet, nämlich als Wellrohr (Figuren 3 und 6) oder als Drallrohr (Figur 7).
Wie insbesondere aus Figur 3 und den Figuren 6 und 7 ersichtlich ist, hat dieses als profiliertes Rohr 3 ausgebildete Heizrohr einen Abstand zum Boden des Plattenkörpers 1, und zwar derart, dass überall ein ausreichender Durchströmungsquerschnitt für das im Hohlraum 2 befindliche Wärmeübertragungsmedium, z. B. Wasser verbleibt.

Beim Ausführungsbeispiel der Figur 6 ist das profilierte Rohr 3 mit ringförmigen Wandeinformungen versehen, die ringförmig um die Rohrachse verlaufen. Die zwischen den Wandeinformungen verlaufenden Wellenscheitel sind in Figur 6 durch gestrichelte Linien angedeutet. Beim Ausführungsbeispiel der Figur 7 hat das profilierte Rohr 3 demgegenüber Wandeinformungen, die helikal zur Rohrachse verlaufen. Es ist also als Drallrohr ausgebildet. Auch hier sind die zwischen den Wandeinformungen befindlichen Wellenscheitel durch gestrichelte Linien angedeutet.

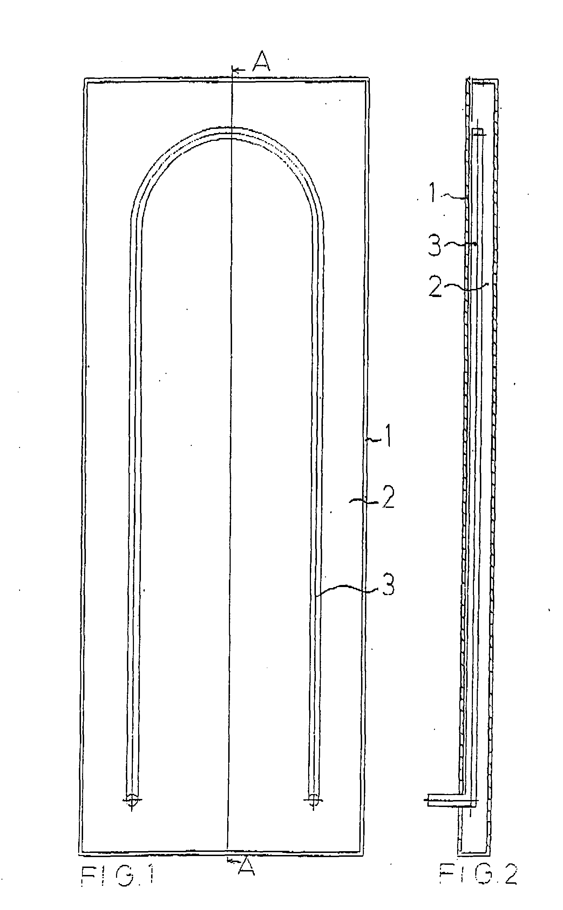

Beim Ausführungsbeispiel der Figuren 1 bis 3 ist das als profiliertes Rohr 3 ausgeblidete Heizrohr nach unten aus dem Plattenkörper herausgeführt. Dort können Zu- und Abflüsse für beliebige Heizmedien, z. B. Heißwasser, Dampf oder dergleichen angeschlossen werden.

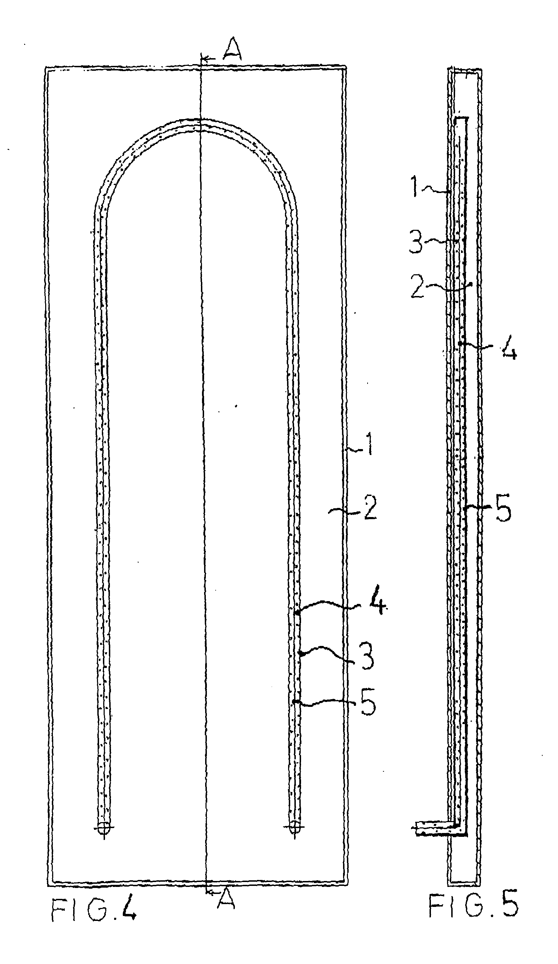

Beim Ausführungsbeispiel der Figuren 4 bis 7 verläuft durch den Innenraum des als Wellrohr 3 ausgebildeten Heizrohres mit Abstand zu dessen Wandungen ein elektrischer Widerstandsheizdraht 4, der in eine gut wärmeleitenden Isolierung 5 eingebettet ist. Diese wärmeleitende Isolierung besteht beispielsweise aus Quarzsand, geeigneten kristallinen Silikaten, aus Siliziumcarbid oder aus Bohrcarbid und hat die Funktion, den Widerstandsheizdraht 4 etwa in der Mitte des profilierten Rohres 3 zu fixieren und zugleich für eine gute Wärmeübertragung von dem Widerstandsheizdraht 4 zur Wandung des profilierten Rohres 3 zu sorgen, welches seinerseits das im Hohlraum 2 befindliche Wärmeübertragungsmedium, z. B. Wasser erwärmt. Das profilierte Rohr 3 und der Widerstandsheizdraht 4 sind mit ihren Enden unten aus Ihrem Plattenkörper 1 herausgeführt und dort auf nicht näher dargestellte Art und Weise mit einem Stromanschluss für den Heizstrom versehen.

Abweichend vom dargestellten Ausführungsbeispiel kann die Isolierung auch aus einer den Widerstandsheizdraht 4 umgebenden zylindrischen Hülle bestehen, die an den nach innen vorstehenden Flächen des profilierten Rohres 3 abgestützt ist. Diese zylindrische Hülle besteht aus einem elektrisch isolierenden, aber dennoch gut wärmeleitenden Material, beispielsweise aus Keramik, keramischen Fasern oder einem mit wärmeleitendem Pulver, z. B. Quarz, Siliziumcarbid, Bohrcarbid oder dergleichen hoch aufgefüllten Polymer.

Zur Verbesserung der Wärmeübertragung von dem Widerstandsheizdraht 4 auf die Wand des profilierten Rohres 3 können die im Inneren des profilierten Rohres 3 verbleibenden Hohiräume der Isolierung noch mit einer elektrisch isolierenden, aber gut wärmeleitenden Flüssigkeit aufgefüllt werden. Die zusätzliche Maßnahme ist bei allen oben diskutierten Ausführungsformen der Isolierung denkbar und zweckmäßig.

Der Plattenkörper 1 ist auf seiner Unterseite und an seinen Rändern mit in der Zeichnung nicht dargestellten Anschlussmöglichkeiten für ein Installationssystem versehen. Die Oberseite des Plattenkörpers 1 ist als Liegefläche für die Tiere ausgestaltet.

## Patentansprüche

1. Beheizbare Bodenplatte für einen Stallboden, insbesondere für einen Schweinestall, bestehend aus einem plattenförmigen, einen Hohlraum (2) ausbildenden Plattenkörper (1), dessen Oberseite als Liegefläche für die Tiere ausgebildet ist und durch dessen mit einem flüssigen Wärmeübertragungsmedium befüllten Hohlraum (2) mindestens ein metallisches Heizrohr verläuft, welches an eine externe Wärmequelle anschließbar ist,
**dadurch gekennzeichnet, dass** das Heizrohr als profiliertes Rohr (3) mit einer gegenüber einem zylindrischen Rohr vergrößerter Oberfläche ausgebildet ist.

2. Beheizbare Bodenplatte nach Anspruch 1, **dadurch gekennzeichnet, dass** das profilierte Rohr (3) mit ringförmigen Wandeinformungen als Wellrohr ausgebildet ist.

3. Beheizbare Bodenplatte nach Anspruch 1, **dadurch gekennzeichnet, dass** das profilierte Rohr (3) mit helikal verlaufenden Wandeinformungen als Drallrohr ausgebildet ist.

4. Beheizbare Bodenplatte nach einem der Ansprüche 1 bis 3, **dadurch gekennzeichnet, dass** das profilierte Rohr (3) aus nicht rostendem Stahl besteht und eine Wandstärke von 0,1 bis 0,6 mm hat.

5. Beheizbare Bodenplatte nach einem der Ansprüche 1 bis 3, **dadurch gekennzeichnet, dass** das profilierte Rohr (3) im Inneren des Hohlraumes (2) des Plattenkörpers (1) mit Abstand zum Boden des Plattenkörpers (1) angeordnet ist.

6. Beheizbare Bodenplatte nach einem oder mehreren der Ansprüche 1 bis 5, **dadurch gekennzeichnet, dass** im Inneren des profilierten Rohres (3) ein Widerstandsheizdraht (4) verläuft und dass im Zwischenraum zwischen dem Widerstandsheizdraht (4) und der Wand des profilierten Rohres (3) eine Isolierung (5) angeordnet ist, die den Widerstandsheizdraht (4) auf Distanz von der Wand des profilierten Rohres (3) hält und zugleich einen großflächigen wärmeleitenden Kontakt zwischen dem Widerstandsheizdraht (4) und der Wand des profilierten Rohres (3) herstellt.

7. Beheizbare Bodenplatte nach Anspruch 6, **dadurch gekennzeichnet, dass** die Isolierung (5) aus einem den Zwischenraum zwischen dem Widerstandsheizdraht (4) und der Wand des profilierten Rohres (3) ausfüllenden, wärmeleitfähigem Mineralpulver besteht.

8. Beheizbare Bodenplatte nach Anspruch 7, **dadurch gekennzeichnet, dass** die Isolierung (5) aus kristallinen Silikaten, Quarz. Siliziumcarbid oder Bohrcarbid besteht.

9. Beheizbare Bodenplatte nach Anspruch 6, **dadurch gekennzeichnet, dass** die Isolierung (5) aus einer den Widerstandsheizdraht (4) umschließenden zylinderförmigen Hülle besteht, die an den nach innen vorstehenden Flächen der Wandung des profilierten Rohres (3) abgestützt ist.

10. Beheizbare Bodenplatte nach einem oder mehreren der Ansprüche 6 bis 9, **dadurch gekennzeichnet, dass** die Isolierung (5) durch eine in das profilierte Rohr (3) eingefüllte, wärmeleitende Flüssigkeit ergänzt wird.

11. Beheizbare Bodenplatte nach Anspruch 1, **dadurch gekennzeichnet, dass** die Unterseite und/oder die Ränder des Plattenkörpers (1) zum Anschluss an ein Tragsystem ausgebildet sind.

12. Beheizbare Bodenplatte nach einem der Ansprüche 1 bis 11, **dadurch gekennzeichnet, dass** der Plattenkörper (1) aus Kunststoff, insbesondere aus Polyethylen oder Polypropylen besteht.

13. Stall, insbesondere Schweinestall, **gekennzeichnet durch** mindestens eine Bodenplatte nach einem der Ansprüche 1 bis 12.
